# EUROPEAN PATENT APPLICATION

(11) **EP 4 722 779 A1**
(43) Date of publication of application: **08.04.2026**
(21) Application number: 25204754.3
(22) Date of filing: 25.09.2025
(51) Int. Cl.: G02B 6/38

(54) **FIBER OPTIC COUPLERS**

(30) Priority: 30.09.2024 US 202463701154 P
(71) Applicant: CORNING RESEARCH & DEVELOPMENT CORPORATION, Corning NY 14831 (US)
(72) Inventor: THOMPSON, Zachary, Texas, 78732 (US)
(74) Representative: Elkington and Fife LLP

(57) **Abstract**

A fiber optic coupler includes a coupler housing, an inner housing for releasably receiving a fiber optic connector, a release sleeve, and a retainer. The release sleeve is mounted to the inner housing within the coupler housing and is translatable within the coupler housing between a first position and a second position. The retainer is moveably mounted to the inner housing and engaged with the release sleeve, wherein movement of the release sleeve from the first position to the second position causes the retainer to move radially relative to the inner housing from a locking position to an unlocking position to release the fiber optic connector.

## Description

### PRIORITY APPLICATION

This application claims the benefit of priority of U.S. Application Serial No. 63/701,154, filed on September 30, 2024, the content of which is relied upon and incorporated herein by reference in its entirety.

### TECHNICAL FIELD

The present specification generally relates to fiber optic couplers for releasably receiving fiber optic connectors.

### BACKGROUND

Optical fibers are used in an increasing number and variety of applications, such as a wide variety of telecommunications and data transmission applications. As a result, fiber optic networks include an ever-increasing number of terminated optical fibers and fiber optic cables that can be conveniently and reliable mated with corresponding optical receptacles in the network. These terminated optical fibers and fiber optic cables are available in a variety of connectorized formats including, for example, Pushlok^{®} connectors, hardened OptiTap^{®} and OptiTip^{®} connectors, field-installable UniCam^{®} connectors, pre-connectorized single or multi-fiber cable assemblies with SC, FC, or LC connectors, etc., all of which are available from Corning Incorporated, and other connectors available from other manufacturers.

The optical receptacles with which the aforementioned terminated fibers and cables are coupled are commonly provided at optical network units (ONUs), network interface devices (NIDs), and other types of network devices or enclosures, and often require hardware that is sufficiently robust to be employed in a variety of environments under a variety of installation conditions. These conditions may be attributable to the environment in which the connectors are employed, or the habits of the technicians handling the hardware. Consequently, there is a continuing drive to enhance the robustness of these connectorized assemblies, while preserving quick, reliable, and trouble-free optical connection to the network.

Moreover, optical couplers which couple these connectorized fiber optic cables/fibers to optical receptacles often require complex structures that both connect to fiber optic cable/fiber to the optical receptacle but environmentally seal the assembly, while meeting required tensile force resistance requirements (e.g., as outlined in GR-771 and IEC 61753). Moreover, such may require field installation, which may lead to user error. Further, as demand increases, networks will become smaller/more dense, smaller footprints of optical couplers become more desirable.

Accordingly, a need exists for new fiber couplers for connecting terminated optical fibers and/or cables to enclosures or, in some cases, one another.

### SUMMARY

In one embodiment, a fiber optic coupler includes a coupler housing, an inner housing for releasably receiving a fiber optic connector, a release sleeve, and a retainer. The release sleeve is mounted to the inner housing within the coupler housing and is translatable within the coupler housing between a first position and a second position. The retainer is moveably mounted to the inner housing and engaged with the release sleeve, wherein movement of the release sleeve from the first position to the second position causes the retainer to move radially relative to the inner housing from a locking position to an unlocking position to release the fiber optic connector.

In another embodiment, a fiber optic coupler includes a coupler housing, an inner housing for releasably receiving a fiber optic connector, a release sleeve, and a retainer. The inner housing defines a radial pass-through extending radially into an interior of the inner housing. The release sleeve is mounted to the inner housing within the coupler housing and is translatable within the coupler housing between a first position and a second position. The retainer is moveably mounted to the inner housing and engaged with the release sleeve. Movement of the release sleeve from the first position to the second position causes the retainer to move radially relative to the inner housing from a locking position, wherein a retaining edge of the retainer extends through the radial pass-through, to an unlocking position to release the fiber optic connector, wherein the retaining edge is at least partially withdrawn through the radial pass-through.

In yet another embodiment, a fiber optic coupler includes an adapter housing comprising a first receiving end a second receiving end, a first releasable locking assembly for receiving a first fiber optic connector positioned in the first receiving end, and a second releasable locking assembly for receiving a second fiber optic connector positioned in the second receiving end. The first and second releasable locking assemblies include an inner housing for releasably receiving a respective fiber optic connector, the inner housing defining a radial pass-through extending radially into an interior of the inner housing, a release sleeve mounted to the inner housing within the adapter housing and translatable within the adapter housing between a first position and a second position, and a retainer moveably mounted to the inner housing and engaged with the release sleeve. Movement of the release sleeve from the first position to the second position causes the retainer to move radially relative to the inner housing from a locking position to an unlocking position to release the respective fiber optic connector.

These and additional features provided by the embodiments described herein will be more fully understood in view of the following detailed description, in conjunction with the drawings.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1A schematically depicts a rear perspective view of a fiber optic coupler having a releasable locking assembly for receiving a fiber optic connector, according to one or more embodiments shown and described herein;
FIG. 1B schematically depicts a partial cross section to further illustrate components of the releasable locking assembly of FIG. 1A, according to one or more embodiments shown and described herein;
FIG. 1C schematically depicts an exploded view of the fiber optic coupler of FIG. 1B, according to one or more embodiments shown and described herein;
FIG. 2A schematically depicts a perspective view of an internal housing of the releasable locking assembly of FIG. 1C, according to one or more embodiments shown and described herein;
FIG. 2B schematically depicts a side view of the internal housing of FIG. 2A, according to one or more embodiments shown and described herein;
FIG. 3A schematically depicts a perspective view of a retainer of the releasable locking assembly of FIG. 1C in isolation, according to one or more embodiments shown and described herein;
FIG. 3B schematically depicts a front or axial view of the retainer of FIG. 3A, according to one or more embodiments shown and described herein;
FIG. 3C schematically depicts a sectional view of the retainer along line 3C-3C of FIG. 3B, according to one or more embodiments shown and described herein;
FIG. 4 schematically illustrates the retaining ring of FIGS. 3A-3C mounted to the internal housing of FIGS. 2A-2B, according to one or more embodiments shown and described herein;
FIG. 5A schematically depicts in interior view of the fiber optic coupler of FIG. 1A to illustrate the releasable locking assembly with the retainer in a locking position, according to one or more embodiments shown and described herein;
FIG. 5B schematically depicts the retainer of FIG. 5A moved to an unlocking position, according to one or more embodiments shown and described herein;
FIG. 6 schematically depicts a section view through the releasable locking assembly of FIG. 5A with the retainer in the locking position, according to one or more embodiments shown and described herein;
FIG. 7A schematically depicts partial insertion of a fiber optic connector into the fiber optic coupler of FIG. 1A, according to one or more embodiments shown and described herein;
FIG. 7B schematically depicts full insertion of the fiber optic connector of FIG. 7A into the fiber optic coupler, according to one or more embodiments shown and described herein;
FIG. 7C schematically depicts a longitudinal sectional view of the fiber optic coupler and fiber optic connector of FIG. 7B, according to one or more embodiments shown and described herein;
FIG. 8 schematically depicts an array of fiber optic connectors mounted to an enclosure via an array of fiber optic couplers, according to one or more embodiments shown and described herein;
FIG. 9A schematically depicts an axial sectional view of a fiber optic connector positioned within a fiber optic coupler and locked thereto, according to one or more embodiments shown and described herein;
FIG. 9B provides a perspective view of the axial sectional view of FIG. 9A, according to one or more embodiments shown and described herein;
FIG. 9C schematically depicts a retainer of FIG. 9A and 9B moved to an unlocking position, according to one or more embodiments shown and described herein;
FIG. 9D provides a perspective view of the axial sectional view of FIG. 9C, according to one or more embodiments shown and described herein;
FIG. 9E provides a longitudinal cross-section of the optical coupler of FIG. 9A-9D with the retainer in the unlocked configuration, according to one or more embodiments shown and described herein;
FIG. 10A schematically depicts a retainer having strain increase feature, according to one or more embodiments shown and described herein;
FIG. 10B schematically depicts a retaining having a strain relief feature, according to one or more embodiments shown and described herein;
FIG. 11A schematically depicts an adapter incorporating a first releasable locking assembly and a second releasable locking assembly, according to one or more embodiments shown and described herein;
FIG. 11B schematically depicts an interior view of the adapter of FIG. 11A , according to one or more embodiments shown and described herein; and
FIG. 12 depicts another optical coupler including a releasable locking assembly, according to one or more embodiments shown and described herein.

### DETAILED DESCRIPTION

Embodiments of the present disclosure are directed to fiber optic couplers which may be used to couple a connectorized optical fiber or connectorized optical fiber cable (such as but not limited to Pushlok^{®} connectors, hardened OptiTap^{®} and OptiTip^{®} connectors, field-installable UniCam^{®} connectors, pre-connectorized single or multi-fiber cable assemblies with SC, FC, or LC connectors, etc., all of which are available from Corning Incorporated, and other connectors available from other manufacturers to other optical components such as but not limited to, other connectorized optical fibers, optical network units (ONUs), network interface devices (NIDs), and other types of network devices or enclosures. In particular, embodiments of the present disclosure are directed to fiber optic couplers having releasable locking assemblies to allow a technician or user to modify optical connections easily and conveniently. For example, embodiments of the present disclosure provide axially activated release mechanisms which allow for easy one-handed operation, but also has reduced space requirements. Accordingly, incorporation of the fiber optic couplers as described herein may allow for denser arrays for inputs into enclosures. These and additional features and benefits will be described in greater detail below.

Ranges can be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

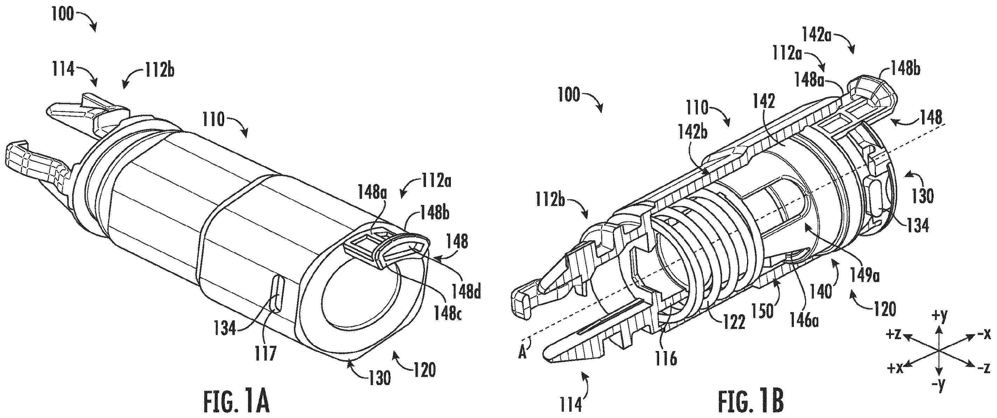

Referring now to FIG. 1A-1C a fiber optic coupler 100 is generally depicted. It is noted that the present embodiment is illustrated in the form of an optical converter. However, as will be described in greater detail the fiber optic coupler 100 may be any type of fiber optic coupler such as for coupling a fiber optic connector of an optical fiber or cable to an enclosure, network device, or other fiber optic connector. For example, fiber optic couplers 100 as described herein may be incorporated or form part of a port of an enclosure, network device, or adapter.

Still referring to FIGS. 1A-1C, the fiber optic coupler 100 may generally include a coupler housing 110 and a releasable locking assembly 120 positioned within the coupler housing 110. As noted above, in the present embodiment, the coupler housing 110 is illustrated as a converter housing, which may include a receiving end 112a and a coupler end 112b configured to be coupled to an enclosure. For example, the coupler end 112b may have a plurality of prongs 114, which may anchor the fiber optic coupler 100 within an opening of an enclosure. The receiving end 112a may receive the releasable locking assembly 120 and a fiber optic connector, which may have a fiber optic cable coupled thereto. The coupler housing 110 may be substantially hollow as illustrated in FIG. 1B. In embodiments, the coupler housing 110 may include one or more retention features for retaining and/or aligning various components of the releasable locking assembly 120. For example, the coupler housing 110 may include or define a spring holder 116 and/or one or more detents 117, which will be described in greater detail with respect to the releasable locking assembly 120.

The releasable locking assembly 120 may generally include an inner housing 130, a release sleeve 140, and a retainer 150. The releasable locking assembly 120 may further include a biasing member 122 much as a spring (e.g., a helical spring, leaf spring, etc.).

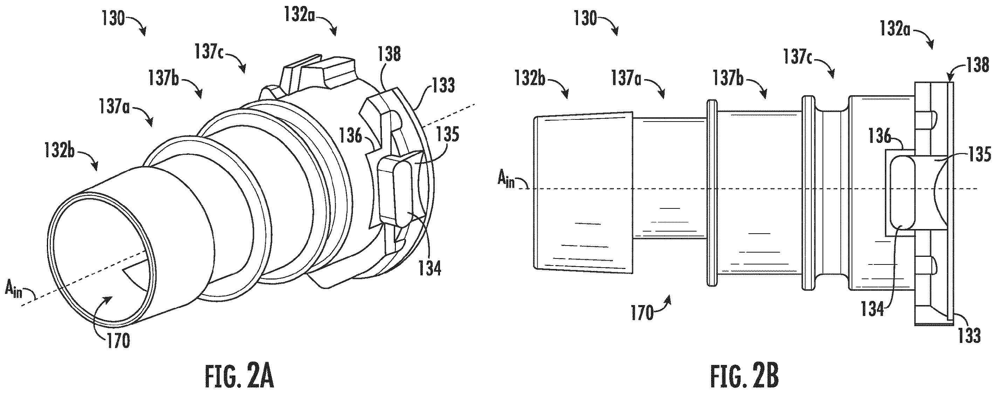

Referring to FIGS. 2A and 2B, the inner housing 130 is illustrated in isolation for ease of description. The inner housing 130 is sized to be received within the outer housing 110. The inner housing 130 may have a substantially tubular shape and extend between a first end 132a and a second end 132b. Accordingly, the inner housing 130 may be hollow such that it may releasably receive a fiber optic connector, as will be described in greater detail herein. Formed by or coupled to the first end 132a may be a retention tab 134 the retention may be depressible for insertion into the coupler housing 110. For example, the retention tab 134 may be radially depressible such as toward a hollow interior of the inner housing 130. In one embodiment, such as depicted, a proximal flange 133 may be formed at the first end 132a. The proximal flange 133 may extend radially outward relative to a longitudinal axis, Aᵢₕ, of the inner housing 130. The retention tab 134 may be coupled to the proximal flange 133 via an extending portion 135. The extending portion 135 may be thin enough to allow the retention tab 134 to flex inward and while providing spring force to return the retention tab 134 to its original position. In some embodiments, the inner housing 130 may define a tab flexure aperture 136 positioned behind the retention tab 134 to facilitate flexure of the retention tab 134. As illustrated in FIG. 1A, when assembled to the coupler housing 110, the retention tab 134 may be positioned within the detent 117 thereby locking the inner housing 130 within and relative to the coupler housing 110. While only one retention tab 134 is illustrated, the inner housing 130 may have any number of retention tabs corresponding to the number of detents 117 formed within the coupler housing 110.

The coupler housing 110 may be any suitable size in some embodiments, the total length of the coupler housing may be between about 40 and about 70 mm, such as about 60 mm. The diameter at the first end may be between about 10 mm and about 30 mm, such as about 22 mm. The diameter at the second end may be somewhat smaller that at the first end such as between about 10 mm and about 30 mm, such as about 19 mm. Other sizes are contemplated and possible.

The inner housing 130 may further define a plurality of radially recessed regions which circumscribe the inner housing 130. For example, in the inner housing 130 may have first recessed region 137a for receiving the retainer 150 as will be described in greater detail, accordingly, the first recessed region 137a may also be referred to as a retainer-receiving channel. A second recessed region 137b may be positioned adjacent to the first recessed region 137a. The second recessed region 137b may support a translating movement of the release sleeve 140. The third recessed region 137c may be positioned adjacent to the second recessed region 137b and may receive a sealing device, such as an O-ring, gasket, or the like, to provide a fluid tight seal with the release sleeve 140. Accordingly, in embodiments, the second recessed region 137b may be positioned longitudinally between the first recessed region 137a and the second recessed region 137b.

In embodiments, the inner housing 130 defines a radial pass-through 170 extending radially into an interior of the inner housing 130. The radial pass-through 170 may be positioned within the first recessed region 137a. In embodiments, and as will be described in greater detail herein, the retainer 150 is movable in a radial direction into/out of the radial pass-through 170. The inner housing 130 may further define a longitudinal pass-through 138 which extend longitudinally through the proximal flange 133. The longitudinal pass-through 138 may allow for an extending button 148 of the release sleeve 140 to pass there-through and be accessible outside the coupler housing 110.

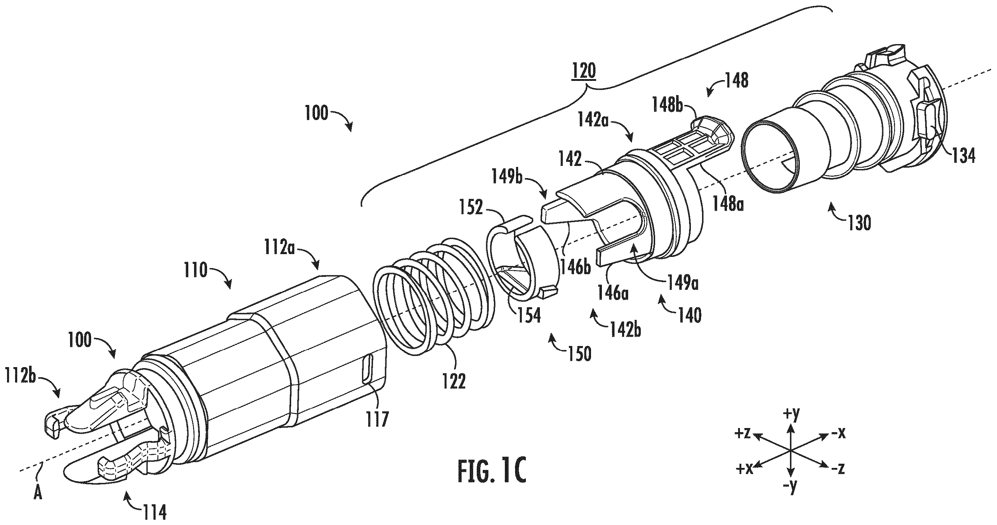

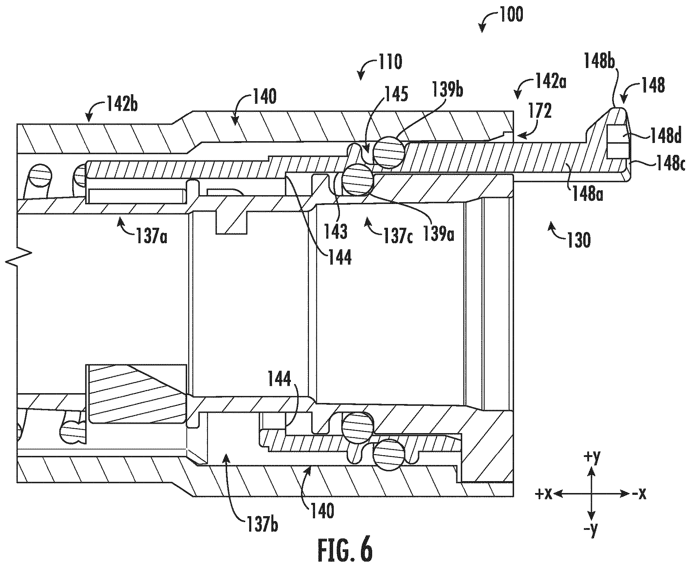

Referring again to FIGS. 1C and 1B, the release sleeve 140 may have a release sleeve body 142 extending between a first end 142a and a second end 142b. The release sleeve body 142 may be generally tubular so as to be axially received over the inner housing 130. Referring briefly to FIG. 6, the release sleeve 140 may have one or more internally projecting surfaces 144 which may act as stop surfaces to longitudinal translation in a rear ward direction (e.g., -X direction of the depicted coordinate axes) to a desired or predetermined distance.

Referring again to FIG. 1B and 1C, formed within the second end 142b may be one or more actuation components, which, as will be described in greater detail herein, may interact with the retainer 150 to move the retainer 150 from a locking position to an unlocking position. For example, the actuation components may include a first cam surface 146a and a second cam surface 146b. The first cam surface 146a and the second cam surface 146b may be angled at some acute angle with respect to a longitudinal axis A, through the fiber optic coupler 100. The degree of angling may be tuned based on the amount of radial translation needed to move the retainer 150 to the unlocking position. This may be better understood from further discussion below with respect to the retainer 150. The release sleeve 140 may further define a first retainer flexure opening 149a and a second retainer flexure opening 149b. In embodiments, the first retainer flexure opening 149a and the second retainer flexure opening 149b may extend into the release sleeve body 142 from the second end 132b in the -X direction of the depicted coordinate axes. As will be described in greater detail, the first retainer flexure opening 149a and the second retainer flexure opening 149b may allow the retainer 150 to flex into the first retainer flexure opening 149a and the second retainer flexure opening 149b as the retainer 150 moves to the unlocking position. It is noted that the release sleeve body 142 may be radially discontinuous between the first cam surface 146a and the second cam surface 146b for positioning of the retainer 150, as will be described in greater detail herein.

The release sleeve 140, such as the release sleeve body 142, may further include or define an extending button 148. The extending button 148 may have neck portion 148a extending in the -X direction of the depicted coordinate axes. The neck portion 148a may be sized to be slidingly received within the longitudinal pass-through 138 of the inner housing 130. An actuation portion 148b may be coupled to the neck portion 148a and provide an actuation surface 148c, for engagement by a user to slide the release sleeve 140 relative to the coupler housing 110 and the inner housing 130. The actuation portion 148b may be enlarged relative to the neck portion 148a, so as to not able to slide into the outer housing 110 when fully depressed. That is, the actuation portion 148b may be larger than an opening 172 between the inner housing 130 and the coupler housing 110, best depicted in FIG. 6, which allows the neck portion 148a to extend through. In some embodiments, it is contemplated that the actuation portion 148b is integral with the neck portion 148a, but in some embodiments, the actuation portion 148b may be a cap which may be slipped onto an end of the neck portion 148a (such as via a frictional engagement) or otherwise coupled thereto. In some embodiments, the engagement surface may have a slot 148d formed therein, such as depicted in FIG. 1 for receiving a screwdriver or other tool for pushing the extending button 148.

In some embodiments, the release sleeve 140, such as the release sleeve body 142, may further include or define a radial recess 145, which may receive a second sealing device (e.g., O-ring, gasket, or the like) as will be described in greater detail below.

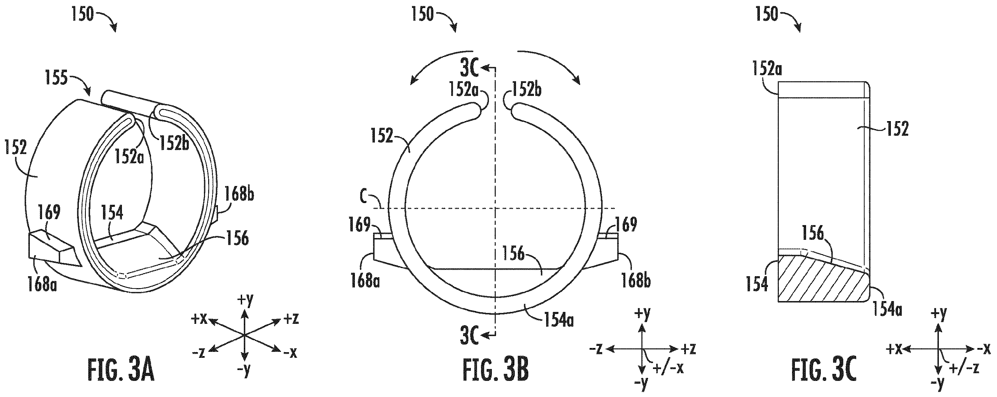

Referring now to FIGS. 3A-3C, the retainer 150 is depicted in isolation. The retainer 150 may generally include an open-ring body 152. That is, the retainer 150 may be substantially ring-shaped but may have a void or opening 155 formed within the open-ring body 152 allowing the effective diameter of the open-ring body 152 to increase or decrease. Stated another way, the open-ring body 152 is discontinuous along its circumference. Accordingly, the opening 155 may separate terminal ends 152a, 152b of the open-ring body 152. As will be apparent in the description below, in the locking position the opening 155 is narrower than in the unlocking position.

In embodiments, the retainer 150 may include a retaining edge 154 configured to engage a body of the fiber optic connector 200, described in greater detail below. For example, a thickness of the retainer 150 may increase from a first edge 154a to the retaining edge 154, such as in the axial direction (e.g., along the +X direction of the depicted coordinate axes). Accordingly, an internal ring surface 156, or a portion thereof (as depicted), may be sloped (such as linearly sloped, curvingly sloped, or the like) between the first edge 154a to the retaining edge 154. The retaining edge 154 may be opposite the opening 155 along the Y axis of the depicted coordinate axes. The internal ring surface 156 may be shaped to match a corresponding recess within a body of the fiber optic connector 200, described in greater detail below.

Extending outwardly from the open-ring body 152 may be a plurality of projections such as a first projection 168a and a second projection 168b, configured to be engaged by the release sleeve 140, as will be described in greater detail below. The first and second projections 168a, 168b may be positioned opposite from one another may be positioned below a horizontal centerline C of the open-ring body 152, such as illustrated in FIG. 3B. Each of the first projection 168a and second projection 168b may include a sloped surface 169, for example, having a slope which matches the slopes of the first cam surface 146a and the second cam surface 146b. That is, the sloped surface 169 may be sloped at some acute angle relative to a horizontal axis, such as the +/- X axis of the depicted coordinate axes.

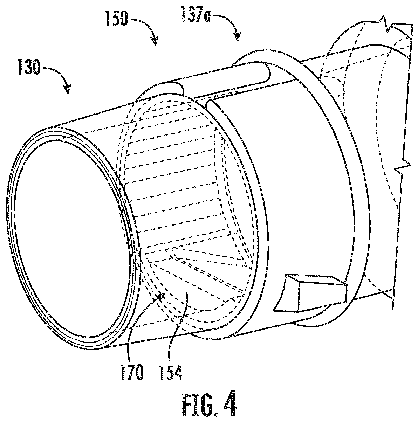

Referring now to FIG. 4, the retainer 150 is illustrated as moveably mounted to the inner housing 130 in isolation from the rest of the assembly. The inner housing 130 is illustrated as transparent for better depiction of the interaction between the retainer 150 and the inner housing 130. For example, the retainer 150, such as the open-ring body 152 may be received within the first recessed region 137a. That is the first recessed area may be sized that that the retainer 150 fits within the width of the first recessed region 137a. The retainer 150 is illustrated in the locking position. In such position, the retainer 150, e.g., the retaining edge 154, extends into an interior of the inner housing 130. That is, the retainer 150 may extend through the radial pass-through 170 of the inner housing 130. The retainer 150 may be held in place via a gripping force of the open-ring body 152. That is, the retainer 150 may be biased (such as spring biased) to the locking position.

Referring now to FIGS. 1B, 1C, and 5A-6, the release sleeve 140 may be mounted to the inner housing 130. For example, as illustrated the inner housing 130 is received within the release sleeve 140. As depicted particularly in FIG. 6, the one or more internally projecting surfaces 144 may be positioned so as to be translatable within the second recessed region 137b of the internal housing 130. As further depicted, a first seal 139a (such as an O-ring, gasket, or other sealable material/device) may be disposed within the third recessed region 137c and contact an inner surface 143 of the release sleeve 140, thereby providing a fluid tight seal between the release sleeve 140 and the internal housing 130. For example, such fluid-tight seal may be desirable to prevent unwanted dirt, debris, or fluid from entering the fiber optic coupler 100.

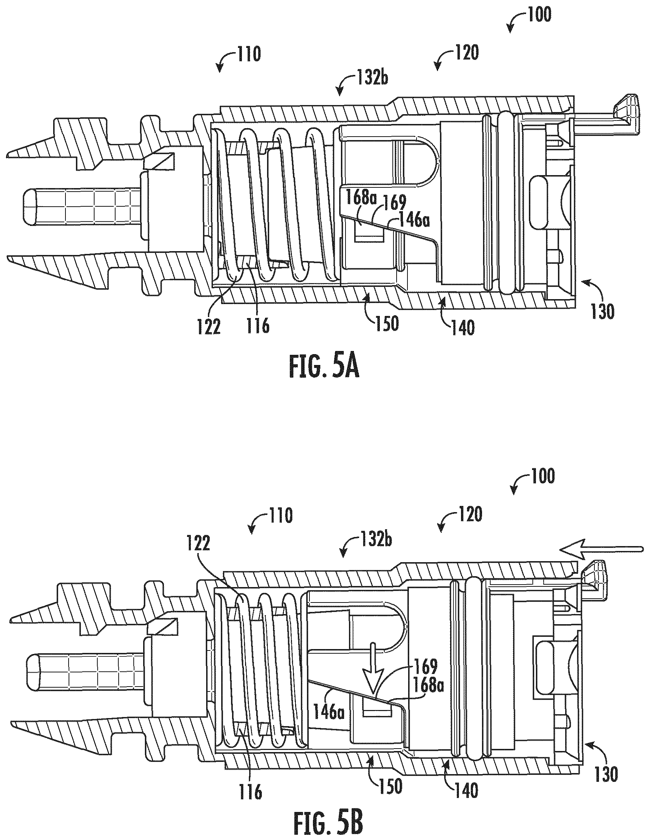

As best depicted in FIGS. 5A and 5B, the release sleeve 140 may be engaged with the retainer 150, such that movement of the release sleeve 140 from a first position (illustrated in FIG. 5A) to a second position (illustrated in FIG. 5B) causes the retainer 150 to move in a radial direction relative to the inner housing 130 from the locking position to the unlocking position. For example, the release sleeve 140 may engage with the plurality of projections (e.g., the first projection 168a and the second projection 168b). In particular embodiments, the first cam surface 146a may be engaged with the first projection 168a (e.g., the sloped surface 169) and the second cam surface 146b may be engaged with the second projection 168b (e.g., the sloped surface 169). Due to the angle of the first and second cam surfaces 146a, 146b and/or the angles of the engagement surfaces, moving the release sleeve 140 axially in the +X direction of the depicted coordinate axes pushes down on the first projection 168a and the second projection 168b which causes the opening 154 to open to a wider configuration than in the locking position to allow the retainer 150 to move radially downward to the unlocking position.

This movement may all take place within and relative to the coupler housing 110. For example, the inner housing 130, the retainer 150, and the release sleeve 140 may be received within the coupler housing 110. As noted previously, the inner housing 130 may include a retention tab 134 which may be positioned within a corresponding detent 117 to lock the inner housing 130, the retainer 150, and the release sleeve 140 into the coupler housing 110. As depicted, the extending button 148 may extend outside of the coupler housing 110 to be accessible to a user. Accordingly, depression of the extending button 148 in an axial direction, causes the release sleeve 140 to move axially, thereby causing the retainer 150 to move radially from the locking position to the unlocking position as described above.

As noted above, the releasable locking assembly 120 may include the biasing member 122. The biasing member 122 may be positioned between the coupler housing 110 and the release sleeve 140 to bias the release sleeve 140 to the first position, as depicted in FIG. 5A. The spring holder 116 may be an internal wall, wall sections, prongs, or any other structure suitable to maintain alignment of the spring within the coupler housing 110. Accordingly, the second end 132b of the release sleeve 140 may engage the biasing member 122 to compressing the biasing member 122 when the release sleeve 140 is moved to the second position. Inclusion of a biasing member 22 may result in additional force needed to actuate the release sleeve 140 from the first position to the second position, which may prevent unwanted release of a fiber optic connector. In embodiments, such as where the biasing member 122 is a helical spring, a portion of the inner housing 130 may be received by the biasing member 122 as depicted. In some embodiments, a portion of the spring holder 116 may be shaped to receive an engage with a second end 132b of the internal housing 130, thereby providing a more rigid, rugged fiber optic coupler 100. The biasing member 122 may cause the release sleeve 140 to automatically return to the first position after removal of force from the extending button 148, which may allow the retainer 150, under its own spring bias, to return to the locking position.

Referring to FIG. 6 a second seal 139b (e.g., O-ring, gasket, or the like) may be mounted to the release sleeve 140 and engaged with the coupler housing 110. For example, the release sleeve 140 may define a seal recess 145 for maintaining a position of the second seal 139b relative to the release sleeve 140. The second seal 139b may provide a fluid tight seal between the coupler housing 110 and the release sleeve 140, which may be beneficial in preventing ingress of fluid, dirt, or other debris. Accordingly, the first seal 139a and the second seal 139b may together provide a water-tight seal while the release sleeve 140 translates within the coupler housing 110.

The various components described herein may be formed of any suitable material through any suitable manufacturing process. For example, the coupler housing 110, the inner housing 130, the release sleeve 140, and the retainer 150, may all be formed of the same or different materials (e.g., plastic, metal, etc.). In embodiments, the components may be formed via molding or machining processes, such as injection molding, for example. Embodiments, as provided herein provide easy to machine/mold features leading to tight tolerances and reduced stack-up as compared to conventional couplers (e.g., guillotine-style components). Moreover, embodiments of the present disclosure are more compact than the conventional couplers, which may allow for larger arrays of couplers to be incorporated into an enclosure compared to an enclosure of the same size including conventional couplers.

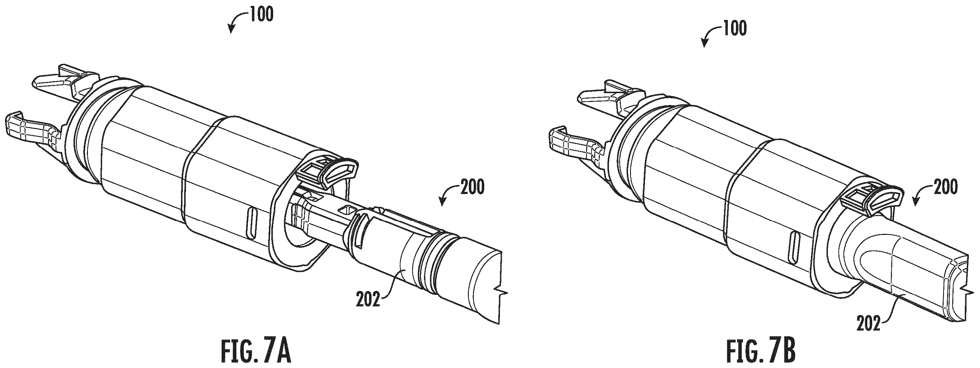

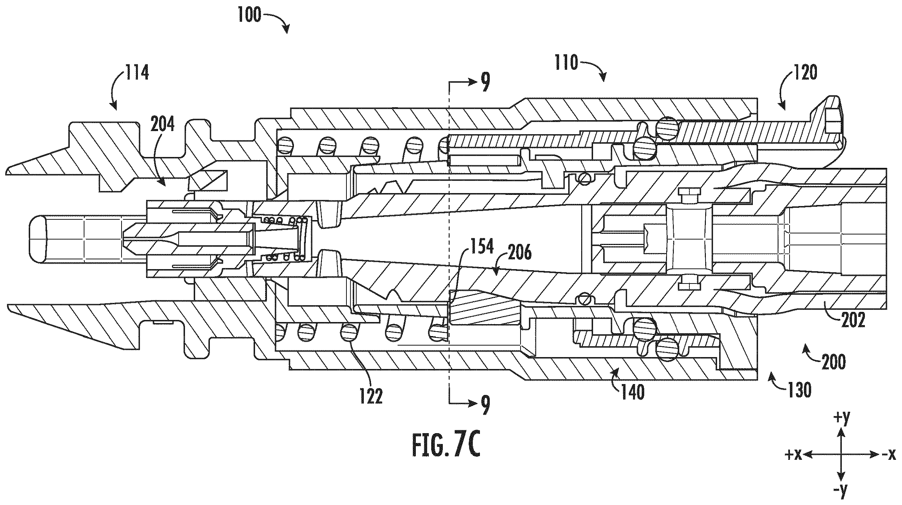

Referring now to FIGS. 7A-7C, insertion of a fiber optic connector 200 within the fiber optic coupler 100 will now be described. FIG. 7A illustrates the fiber optic connector 200 partially inserted into the fiber optic coupler 100 and FIG. 7B illustrates the fiber optic connector 200 fully inserted into the fiber optic coupler 100. FIG. 7C provides a longitudinal sectional view illustrating connection of the fiber optic connector 200 to the fiber optic coupler 100. It is noted that the fiber optic connector 200 is illustrated in a schematic representation without an optical fiber. As depicted, the fiber optic connector 200 may include a connector housing 202 and a ferrule 204 coupled to the connector housing 202 for alignment of a fiber when positioned therein. When fully seated within the fiber optic coupler 100, the ferrule 204 may be positioned concentrically within the plurality of prongs 114. The connector housing 202 may include a recess 206 sized to receive the retainer 150. For example, the internal ring surface 156 may be shaped to mate with the contours of the recess 206. In embodiments, the retaining edge 154 may engage an edge of the recess 206 thereby substantially preventing unwanted withdrawal (e.g., in the -X direction of the depicted coordinate axes) of the fiber optic connector 200 from the coupler housing 110 while the retainer 150 is positioned within the locked position. That is, the retainer increases tensile retention force to pull outer the fiber optic connector 200 relative to conventional fiber optic couplers.

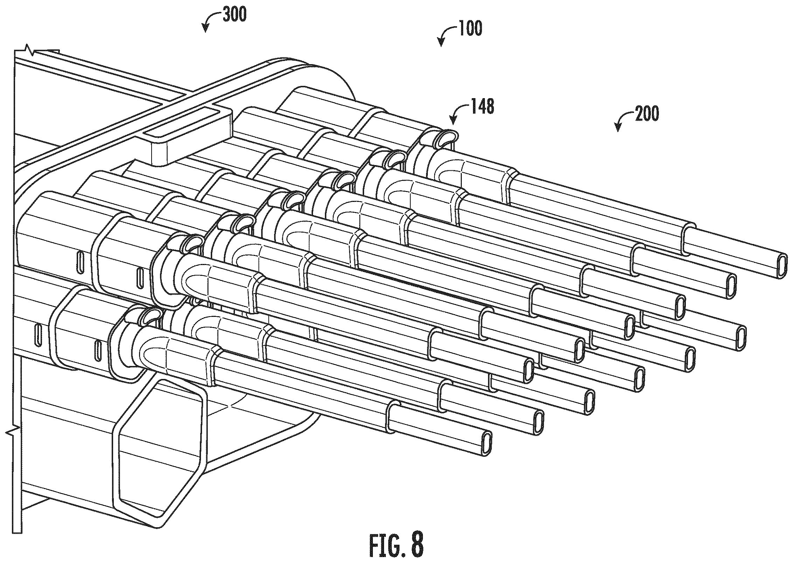

FIG. 8 depicts an enclosure 300, to which a plurality of fiber optic couplers 100 may be coupled. The couplers may be arranged in a two-dimensional array, such as a tightly packed array. In some embodiments, fiber optic couplers 100 may be offset from one another such as in a honeycomb pattern for an even tighter arrangement of fiber optic couplers 100 than conventionally achievable. In particular, because release is achieved via axial actuation of the release sleeve 140 (such as via the extending button 148), a need for orthogonal access (relative to an axial direction of the fiber optic connector 200) may be substantially eliminated.

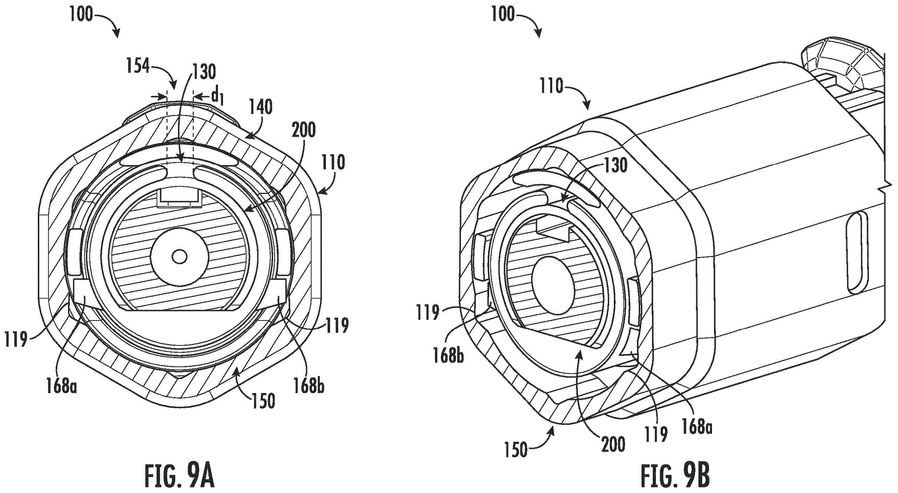

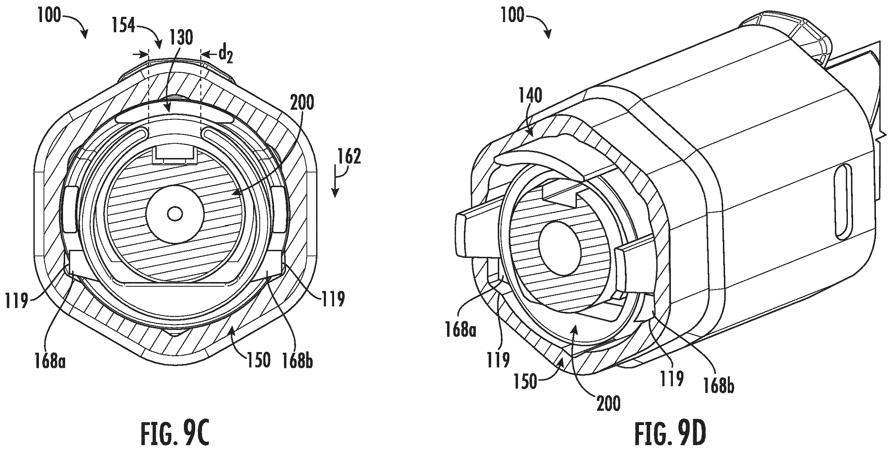

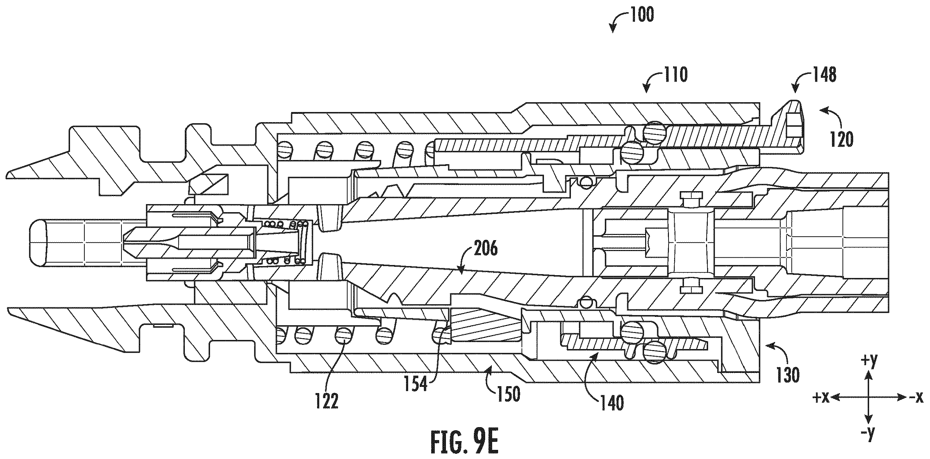

FIGS. 9A-9E generally illustrate release of the fiber optic connector 200 from the fiber optic coupler 100. FIGS. 9A and 9B are an axial cross-section taken along line 9-9 of FIG. 7C with the retainer 150 positioned in the locked position. As depicted, in the locked position the opening 154 has a first width d₁. Referring to FIGS. 9C-9E, the release sleeve 140 is translated to the second position, which causes the retainer 150 to move radially into the unlocking position and allows the fiber optic connector 200 to be removed along arrow 162. In the unlocking position, the opening 154 has a second width d₂, which is larger than the first width. As depicted, the coupler housing 110 may have internal contours having niches 119, which may be sized to receive the first and second projections 168a, 168b when moved to the unlocking position. In embodiments, the release sleeve 140 may translate any suitable distance such as between about 1 mm and about 10 mm (such as about 4 mm) and the retainer 150 may be displaced any suitable distance such as between 0.1 mm and about 4 mm. In some embodiments ratios of movement between the release sleeve 140 and the retainer 150 may be anywhere from 3:1 to 5:1, though any ratio is contemplated and possible. Input force for moving the release sleeve 140 and retainer 150 may be any suitable force applied to the extending button 148 such as between about 4 lbf and 18 lbf, such as about 8 lbf to about 16 lbf. FIG. 9E provides a longitudinal sectional view with the retainer 150 moved to the unlocking position thereby allowed the fiber optic connector 200 to be withdrawn in the -X direction of the depicted coordinate axes.

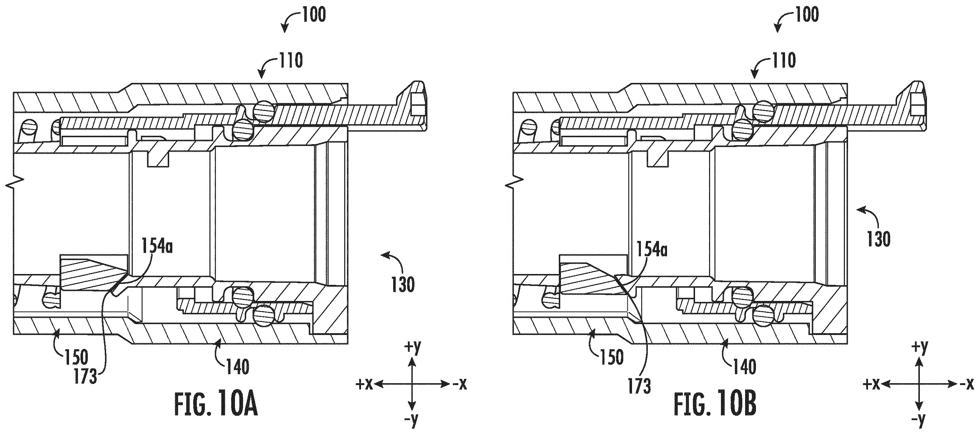

Referring now to FIG. 10A, in embodiments, manufacturers may want to more tightly hold the fiber optic connector 200 in response to a pulling force(e.g., someone simply pulling on the optical cable or fiber optic connector 200), such that the fiber optic connector 200 holds more tightly in response to a pulling force. For example, FIG. 10A illustrates the first edge 154a of the retainer 150 being angled toward an insertion direction of the fiber optic connector 200 (e.g., toward from the -X direction of the depicted coordinate axes). Similarly, a leading edge 173 of the inner housing 130 may be similarly angled so as to be able to engage the first edge 154a along a substantially common plane. The angles may be any suitable angle such as, but not limited to, between about 0.1 degrees and about 45 degrees, such as between about 0.5 degrees and about 2.0 degrees, relative to the horizontal axis. In such embodiments, pulling on the fiber optic connector 200 or associated cable (not shown) may cause, under a predetermine load, the retainer 150 to move upward to more tightly seat in the locking position to provide an even stronger hold on the fiber optic connector 200. In embodiments, instead of both the retainer 150 and the inner housing 130 having such features, one of the retainer 150 or the inner housing 130 may have a sloped surface.

In some embodiments, it may be desirable that the retainer 150 self-eject, or move to the unlocking position, under a predetermined amount of tensile cable load prior to failure, such that components would not be damaged. For example, referring now to FIG. 10B, the first edge 154a of the retainer 150 may be angled away from the insertion direction of the fiber optic connector 200 (e.g., away from the -X direction of the depicted coordinate axes). Similarly, a leading edge 173 of the inner housing 130 may be similarly angled so as to be able to engage the first edge 154a along a substantially common plane. As above, the angles may be any suitable angle such as, but not limited to, between about 0.1 degrees and about 45 degrees, such as between about 0.5 degrees and about 2.0 degrees, relative to the horizontal axis. In such embodiments, pulling on the fiber optic connector 200 or associated cable (not shown) may cause, the retainer 150 to slip under the inner housing 130, thereby moving the retainer 150 to the unlocking position. Angles chosen may allow a manufacturer to dial in the amount of tensile force on the cable to cause ejection, for example, a steeper angle (e.g., such that the angled surfaces are sloped more vertically) may require a greater tensile force acting on the cable to cause ejection than a more shallow angle (e.g., such that the angled surfaces are sloped less vertically).

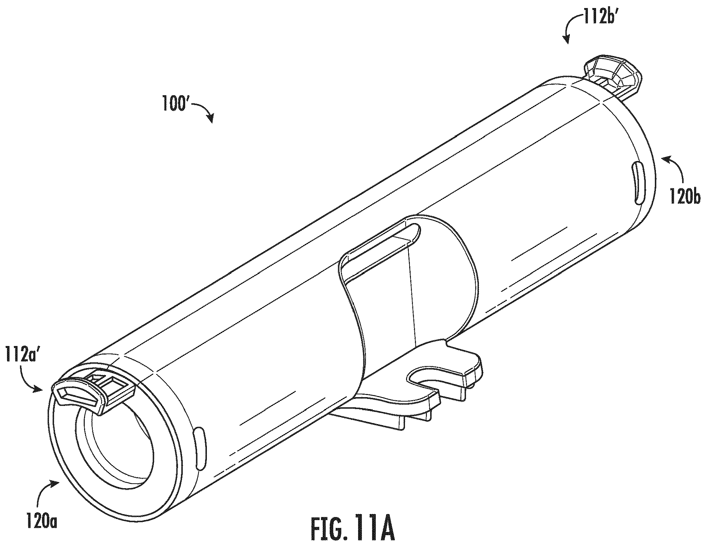

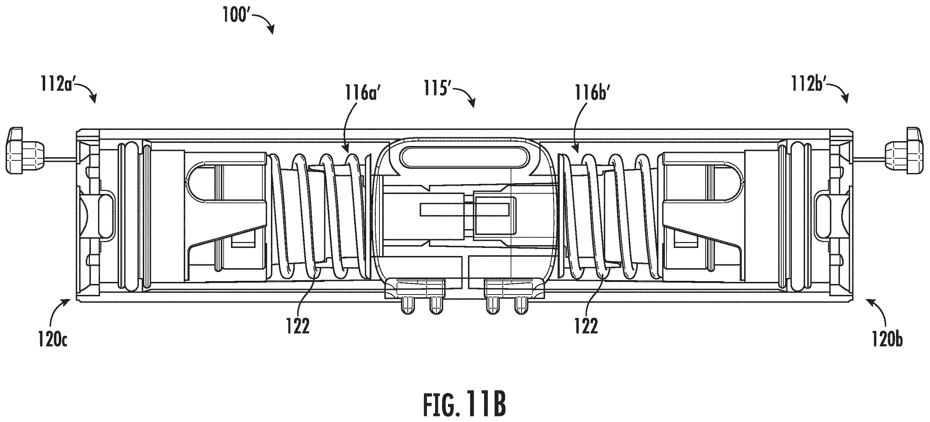

Referring now to FIG. 11A and 11B, other embodiments of a fiber optic coupler 100' is depicted. In the present embodiment, the coupler housing 110 is an adaptor housing 110'. An adaptor may be used to couple to fiber optic connectors to one another in a ferrule-to-ferrule arrangement, which may allow an operator to extend a fiber optic cable, for example. In such embodiments, the adaptor housing 110' has a first receiving end 112a' and a second receiving end 112a'. Positioned within the first receiving end 112a' is a first locking assembly 120a and positioned within the second receiving end 112a is a second locking assembly 120b. Each releasable locking assembly 120 is substantially identical to that described above. Accordingly, the above description is applicable and will not be repeated. The adaptor housing 110' however, may have an internal alignment structure 115' which may provide a first spring holder 116a' and a second spring holder 116b' similar to the spring holder 116 described above for engagement with the biasing elements 122 of the first releasable locking assembly 120a and the second releasable locking assembly 120a. The internal alignment structure 115' may further support close arrangement of ferrules for improved optical transmission.

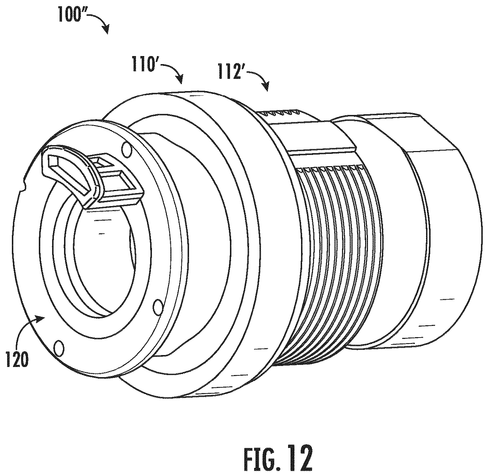

FIG. 12 depicts yet another optical coupler 100". In the present embodiment, the coupler housing 110', instead of a pronged end, includes a threaded end 112', which may be useful in closure such as the OptiTap ^{®} closures or terminals as commercially available from Corning Optical Communications, Inc. However, the releasable locking assembly 120 is otherwise substantially identical that that described above and will not be repeated for brevity.

Embodiments of the present disclosure are further described with respect to the following numbered clauses:
1. A fiber optic coupler comprising: a coupler housing; an inner housing for releasably receiving a fiber optic connector; a release sleeve mounted to the inner housing within the coupler housing and translatable within the coupler housing between a first position and a second position; and a retainer moveably mounted to the inner housing and engaged with the release sleeve, wherein movement of the release sleeve from the first position to the second position causes the retainer to move radially relative to the inner housing from a locking position to an unlocking position to release the fiber optic connector.
2. The fiber optic coupler of clause 1, further comprising a biasing member between the coupler housing and the release sleeve that biases the release sleeve to the first position.
3. The fiber optic coupler of any preceding clause, wherein the retainer comprises an open-ring body defining an opening, wherein the in the locking position the opening is narrower than in the unlocking position.
4. The fiber optic coupler of any preceding clause, wherein the retainer comprises a retaining edge configured to engage a body of the fiber optic connector.
5. The fiber optic coupler of clause 4, wherein a thickness of the retainer increases from a first edge to the retaining edge.
6. The fiber optic coupler any preceding clause, wherein the retainer comprises a plurality of projections extending configured to be engaged by the release sleeve when moved to the second position to move the retainer to the unlocking position.
7. The fiber optic coupler of any preceding clause, wherein: the inner housing defines retainer-receiving channel, and a radial pass-through from an interior of the inner housing to the retainer-receiving channel, and the retainer sits within the retainer-receiving channel, such that a retaining edge of the retainer extends into the radial pass-through in the locking position.
8. A fiber optic coupler comprising: a coupler housing; an inner housing for releasably receiving a fiber optic connector, the inner housing defining a radial pass-through extending radially into an interior of the inner housing; a release sleeve mounted to the inner housing within the coupler housing and translatable within the coupler housing between a first position and a second position; and a retainer moveably mounted to the inner housing and engaged with the release sleeve, wherein movement of the release sleeve from the first position to the second position causes the retainer to move radially relative to the inner housing from a locking position, wherein a retaining edge of the retainer extend through the radial pass-through, to an unlocking position to release the fiber optic connector, wherein the retaining edge is at least partially withdrawn through the radial pass-through.
9. The fiber optic coupler of clause 8, further comprising: a first seal mounted to the inner housing and engaged with the release sleeve; and a second seal mounted to the release sleeve and engaged with the coupler housing.
10. The fiber optic coupler of any of clauses 8-9, wherein: the inner housing comprises a proximal flange defining longitudinal pass-through; and the release sleeve comprises an extending button that extends through the longitudinal pass-through to allow for a portion of the extending button to be accessible external to the coupler housing.
11. The fiber optic coupler of any of clauses 8-10, wherein: the retainer comprises a first projection and a second projection extending from a body of the retainer; the release sleeve comprises a first cam surface engaged with the first projection and a second cam surface engaged with the second projection; and as the release sleeve moves axially within the coupler housing to the second position, the first cam surface and the second cam surface push the first projection and the second projection to cause the retainer to move to the unlocking position.
12. The fiber optic coupler of any of clauses 8-11, wherein: the release sleeve defines a first retainer flexure opening and a second retainer flexure opening, and when the retainer moves to the unlocking position, the retainer flexes into the first retainer flexure opening and the second retainer flexure opening.
13. The fiber optic coupler of any of clauses 8-12, further comprising a biasing member between the coupler housing and the release sleeve that biases the release sleeve to the first position.
14. The fiber optic coupler of any of clauses 8-13, wherein the retainer comprises an open-ring body defining an opening, wherein the in the locking position the opening is narrower than in the unlocking position.
15. The fiber optic coupler of any of clauses 8-14, wherein the coupler housing comprises a pronged coupler end for engagement with a fiber optic enclosure.
16. The fiber optic coupler of any of clauses 8-15, wherein the coupler housing comprises a threaded body for engagement with a fiber optic enclosure.
17. A fiber optic coupler, comprising: an adapter housing comprising a first receiving end a second receiving end; a first releasable locking assembly for receiving a first fiber optic connector positioned in the first receiving end; and a second releasable locking assembly for receiving a second fiber optic connector positioned in the second receiving end, wherein the first and second releasable locking assemblies comprise: an inner housing for releasably receiving a respective fiber optic connector, the inner housing defining a radial pass-through extending radially into an interior of the inner housing; a release sleeve mounted to the inner housing within the adapter housing and translatable within the adapter housing between a first position and a second position; and a retainer moveably mounted to the inner housing and engaged with the release sleeve, wherein movement of the release sleeve from the first position to the second position causes the retainer to move radially relative to the inner housing from a locking position to an unlocking position to release the respective fiber optic connector.
18. The fiber optic coupler of clause 17, wherein the first releasable locking assembly and the second releasable locking assembly are configured to arrange the first fiber optic connector and the second fiber optic connector in a ferrule-to-ferrule orientation.
19. The fiber optic coupler of any of clauses 17-18, wherein the retainers of each of the first releasable locking assembly and the second releasable locking assembly comprise an open-ring body defining an opening, wherein in the locking position the opening is narrower than in the unlocking position.
20. The fiber optic coupler of any of clauses 17-19, wherein the retainers of each of the first releasable locking assembly and the second releasable locking assembly comprise a retaining edge configured to engage a body of the respective fiber optic connector.

It should now be understood embodiments of the present disclosure are directed to fiber optic couplers which releasably lock a fiber optic connector therein. In particular, in embodiments include a releasable locking assembly, which may allow for easy locking/releasing of the fiber optic connector, such as through axial actuation.

It is noted that the terms "substantially" and "about" may be utilized herein to represent the inherent degree of uncertainty that may be attributed to any quantitative comparison, value, measurement, or other representation. These terms are also utilized herein to represent the degree by which a quantitative representation may vary from a stated reference without resulting in a change in the basic function of the subject matter at issue.

While particular embodiments have been illustrated and described herein, it should be understood that various other changes and modifications may be made without departing from the spirit and scope of the claimed subject matter. Moreover, although various aspects of the claimed subject matter have been described herein, such aspects need not be utilized in combination. It is therefore intended that the appended claims cover all such changes and modifications that are within the scope of the claimed subject matter.

## Claims

1. A fiber optic coupler comprising:
a coupler housing;
an inner housing for releasably receiving a fiber optic connector;
a release sleeve mounted to the inner housing within the coupler housing and translatable within the coupler housing between a first position and a second position; and
a retainer moveably mounted to the inner housing and engaged with the release sleeve, wherein movement of the release sleeve from the first position to the second position causes the retainer to move radially relative to the inner housing from a locking position to an unlocking position to release the fiber optic connector.

2. The fiber optic coupler of claim 1, further comprising a biasing member between the coupler housing and the release sleeve that biases the release sleeve to the first position.

3. The fiber optic coupler of claim 1 or 2, wherein the retainer comprises an open-ring body defining an opening, wherein the in the locking position the opening is narrower than in the unlocking position.

4. The fiber optic coupler of any of claims 1-3, wherein the retainer comprises a retaining edge configured to engage a body of the fiber optic connector.

5. The fiber optic coupler of claim 4, wherein a thickness of the retainer increases from a first edge to the retaining edge.

6. The fiber optic coupler any of claims 1-5, wherein the retainer comprises a plurality of projections configured to be engaged by the release sleeve when the release sleeve is moved to the second position to move the retainer to the unlocking position.

7. The fiber optic coupler of and of claims 1-6, wherein:
the inner housing defines retainer-receiving channel, and a radial pass-through from an interior of the inner housing to the retainer-receiving channel, and
the retainer sits within the retainer-receiving channel, such that a retaining edge of the retainer extends into the radial pass-through in the locking position.

8. The fiber optic coupler of and of claims 1-6, wherein:
the inner housing defines a radial pass-through extending radially into an interior of the inner housing;
in the locking position of the retainer, a retaining edge of the retainer extends through the radial pass-through; and
in the unlocking position of the retainer, the retaining edge is at least partially withdrawn through the radial pass-through.

9. The fiber optic coupler of claim 8, further comprising:
a first seal mounted to the inner housing and engaged with the release sleeve; and
a second seal mounted to the release sleeve and engaged with the coupler housing.

10. The fiber optic coupler of claim 8 or 9, wherein:
the inner housing comprises a proximal flange defining longitudinal pass-through; and
the release sleeve comprises an extending button that extends through the longitudinal pass-through to allow for a portion of the extending button to be accessible external to the coupler housing.

11. The fiber optic coupler of any of claims 8-10, wherein:
the retainer comprises a first projection and a second projection extending from a body of the retainer;
the release sleeve comprises a first cam surface engaged with the first projection and a second cam surface engaged with the second projection; and
as the release sleeve moves axially within the coupler housing to the second position, the first cam surface and the second cam surface push the first projection and the second projection to cause the retainer to move to the unlocking position.

12. The fiber optic coupler of any of claims 8-11, wherein:
the release sleeve defines a first retainer flexure opening and a second retainer flexure opening, and
when the retainer moves to the unlocking position, the retainer flexes into the first retainer flexure opening and the second retainer flexure opening.

13. The fiber optic coupler of any of claims 8-12, wherein the coupler housing comprises a pronged coupler end for engagement with a fiber optic enclosure.
